# EUROPEAN PATENT SPECIFICATION

(11) **EP 0 837 312 B1**
(45) Date of publication and mention of the grant of the patent: **30.12.1998**
(21) Application number: 96116678.2
(22) Date of filing: 17.10.1996
(51) Int. Cl.: G01N 1/24

(54) **Method and device for aerosol size-selective sampling**
Verfahren und Vorrichtung zur Entnahme eines Aerosols mit Korngrössenselektion
Procédé et dispositif pour le prélèvement d'un aérosol de granulométrie choisie

(43) Date of publication of application: 22.04.1998
(73) Proprietor: Institute of Occupational Safety and Health, Council of Labor Affairs, Taipei (TW)
(72) Inventor: Shih, Tung-Sheng, Taipei (TW); Yeh, Wen-Yu, Taipei (TW); Chen, Chih-Chieh, Taipei (TW)
(74) Representative: Grünecker, Kinkeldey, Stockmair & Schwanhäusser Anwaltssozietät

(56) References cited:
- DE-A- 4 214 694
- DE-B- 1 299 139
- GB-A- 2 071 518
- ANNALS OF OCCUPATIONAL HYGIENE, vol. 33, no. 3, 1989, OXFORD, GB, pages 301-320, XP000609505 S.C. SODERHOLM: "Proposed international conventions for particle size-selective sampling"

## Description

The present invention relates to an aerosol size-selective sampling method with the features cited in the preamble of claim 1. Furthermore, the present invention relates to an aerosol size-selective sampling device with the features cited in the preamble of claim 8.

The method for assessing the aerosol harmful to the respiratory organs of the industrial workers involves the collection of the aerosol by means of the filter paper, and the measurement of the collected aerosols in terms of the weight concentration.

Generally speaking, the areas of such an investigation as described above include the initial area of the respiratory system in the head portion, the bronchial area comprising the bronchia and the ciliate area, and the alveolar area comprising the non-ciliate portion and the lung sac.

Depending on the physical properties of the toxic fine particles, the deposition of such fine particles may take place in certain specific respiratory areas, which are generally immune from the aerosol in view of the relatively large size of such aerosol. For example, the silicon-containing aerosol are seldom able to travel to arrive at the alveolar area of a person to inflict the silicosis on the person in view of the fact that such silicon-containing aerosol have relatively large aerodynamic diameters and an inertia sinking effect.

It is therefore necessary to develop a method for aerosol size-selective sampling, which is specifically designed to attain a meaningful measurement of the aerosol concentration in different parts of the respiratory system. As a result, certain organizations responsible for establishing the standard methods have introduced the ideal size-selective sampling standards on the basis of the aerodynamic diameter serving as a function. The examples of such organizations are described hereinafter.

As far as the respirable fine particles are concerned, British Medical Research Council (BMRC) had made some suggestions, which were adopted in 1959 by Johannesburg Pneumoconiosis Conference.

In 1983, International Standard Organization (ISO) proposed standards for size-selective sampling of the inspirable or inhalable fine particles in the thoracic cavity and the alveolar area.

In 1985, American Conference of Governmental Industrial Hygienists (ACGIH) proposed standards for size-selective sampling of the inspirable fine particles.

In 1987, The United States Environmental Protection Agency (EPA) proposed the PM 10 sampling standards similar in definition to the standards proposed respectively by ISO and ACGIH.

On the basis of the above suggestions regarding the size-selective sampling, the environmental aerosols are redefined and reclassified as the inspirable aerosol, the thoracic aerosol, and the respirable aerosols. However, these criteria proposed by the afore-mentioned organizations have not been regarded as being workable and acceptable. For this reason, it is imperative that new criteria are established such that they are universally recognized, and that they can be implemented economically.

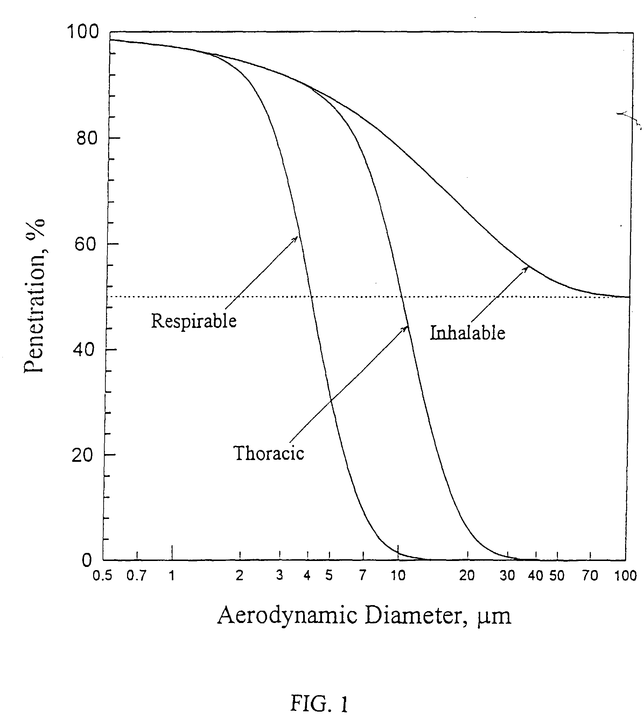

Sidney C. Soderholm proposed three size-selective samplings for the inhalable aerosol, the thoracic aerosol and the respirable aerosol. For more details, please refer to Table 1 and Ann. Occup. Hyg. 33(3):301-320 (1989). These criteria proposed by Soderholm have been recognized and adopted by various international organizations, such as ACGIH, ISOCEN (Commite Europeen de Normalisation). The internationally-defined size-selective sampling curves can be plotted respectively for the inhalable aerosol, the thoracic aerosol and the respirable aerosol on the basis of the data of aerodynamic diameters of the aerosol and the penetration rates of the aerosol. For more details, please refer to Table 1 and Fig. 1. In Fig. 1, the aerodynamic diameters of the aerosol are plotted against the penetration rates of the aerosol so as to obtain the size-selective sampling curves. The dotted line in Fig. 1 is a 50% demarcation line of the penetration rate. It is therefore readily apparent from the coordinate that the 50% cut-off size (D₅₀) of the respirable curve is 4 µm. Similarly, the 50% cut-off sizes of the thoracic curve and the inhalable curve are respectively 10 µm and 100 µm.

**Table 1**

| Inhalable | | Thoracic | | Respirable | |
|---|---|---|---|---|---|
| Aerodynamic diameter (mm) | Penetration rate (%) | Aerodynamic diameter (mm) | Penetration rate (%) | Aerodynamic diameter (mm) | Penetration rate (%) |
| 0.50 | 98.52 | 0.50 | 98.52 | 0.50 | 98.52 |
| 1.00 | 97.09 | 1.00 | 97.09 | 1.00 | 97.07 |
| 2.00 | 94.35 | 2.00 | 94.35 | 2.00 | 91.37 |
| 3.00 | 91.76 | 3.00 | 91.73 | 3.00 | 73.86 |
| 4.00 | 89.33 | 4.00 | 88.96 | 4.00 | 49.98 |
| 5.00 | 87.04 | 5.00 | 85.42 | 5.00 | 29.97 |
| 6.00 | 84.88 | 6.00 | 80.55 | 6.00 | 16.77 |
| 7.00 | 82.85 | 7.00 | 74.16 | 7.00 | 9.05 |
| 8.00 | 80.94 | 8.00 | 66.57 | 8.00 | 4.81 |
| 9.00 | 79.14 | 9.00 | 58.33 | 9.00 | 2.54 |
| 10.00 | 77.44 | 10.00 | 50.03 | 10.00 | 1.35 |
| 11.00 | 75.84 | 11.00 | 42.13 | 11.00 | 0.72 |
| 12.00 | 74.34 | 12.00 | 34.94 | 12.00 | 0.39 |
| 13.00 | 72.92 | 13.00 | 28.63 | 13.00 | 0.21 |
| 14.00 | 71.59 | 14.00 | 23.23 | 14.00 | 0.12 |
| 15.00 | 70.33 | 15.00 | 18.70 | 15.00 | 0.07 |
| 16.00 | 69.15 | 16.00 | 14.96 | 16.00 | 0.04 |
| 17.00 | 67.03 | 17.00 | 11.91 | 17.00 | 0.02 |
| 18.00 | 66.98 | 18.00 | 9.45 | 18.00 | 0.01 |
| 19.00 | 65.99 | 19.00 | 7.49 | 19.00 | 0.01 |
| 20.00 | 65.06 | 20.00 | 5.92 | 20.00 | 0.00 |
| 30.00 | 58.27 | 30.00 | 0.57 | | |
| 40.00 | 54.54 | 40.00 | 0.06 | | |
| 50.00 | 52.49 | 50.00 | 0.01 | | |
| 70.00 | 50.75 | | | | |
| 90.00 | 50.23 | | | | |
| 100.00 | 50.12 | | | | |

A method and a device of the above-mentioned type is described in GB 2071518 A. It discloses an elutriator having a main filter across a passage way to collect respirable particles borne by air, and a pre-filter located across the passage way upstream of the main filter to collect non-respirable particles borne by said air.

It is the object of the present invention to provide an improved method and an improved device of the above-mentioned type which is able to attain a better penetration rate profile.

This object is attained by a method according to claim 1 and a device according to claim 8.

Advantageous features and embodiments of the invention are cited in the dependent claims.

An embodiment of the present invention is described in greater detail with respect to the attached drawing.

Fig. 1 shows three internationally-defined aerosol size-selective sampling curves.

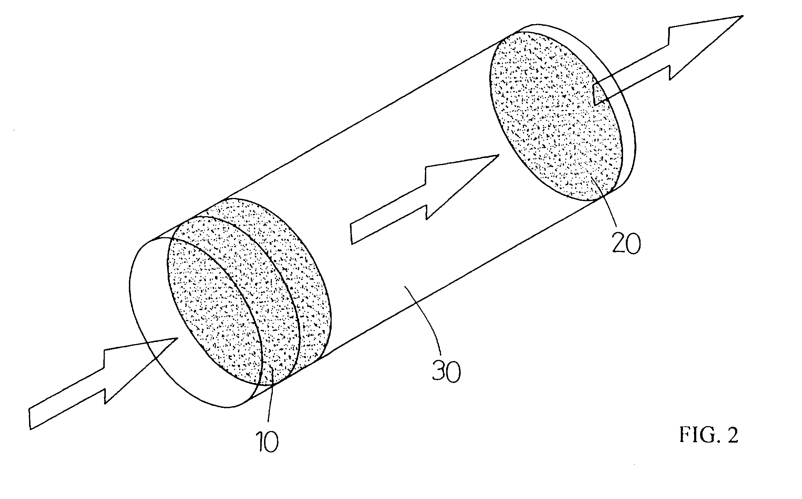

Fig. 2 shows a schematic view of an aerosol size-selective sampling device of the prior art.

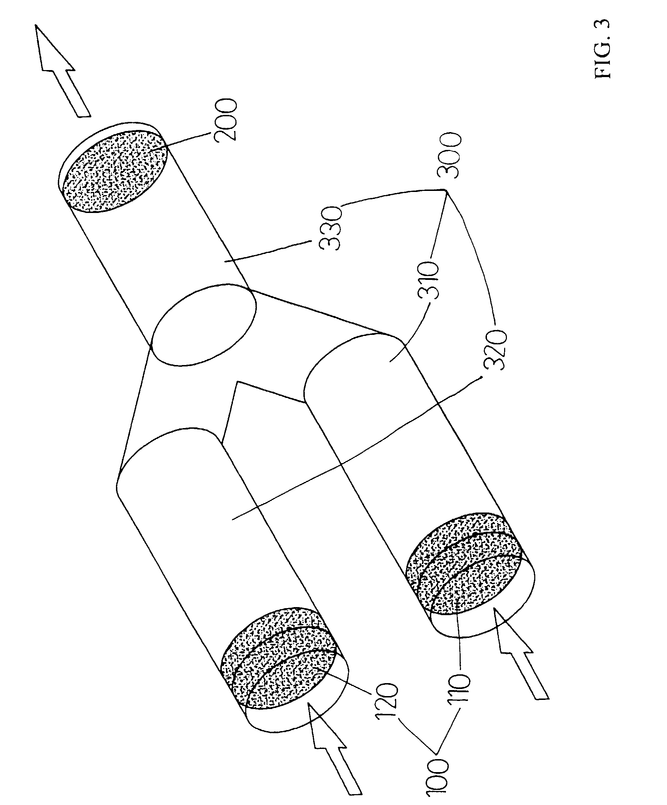

Fig. 3 shows a schematic view of a first preferred embodiment of the present invention.

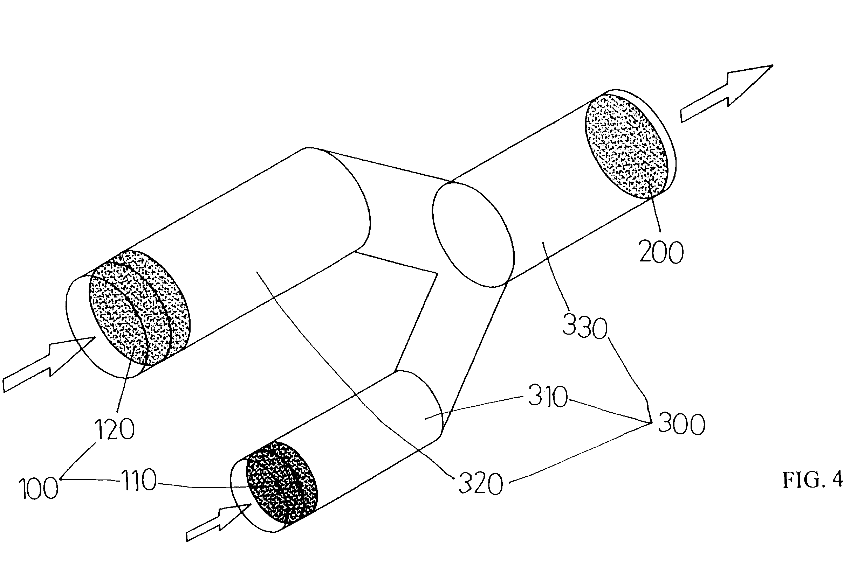

Fig. 4 shows a schematic view of a second preferred embodiment of the present invention.

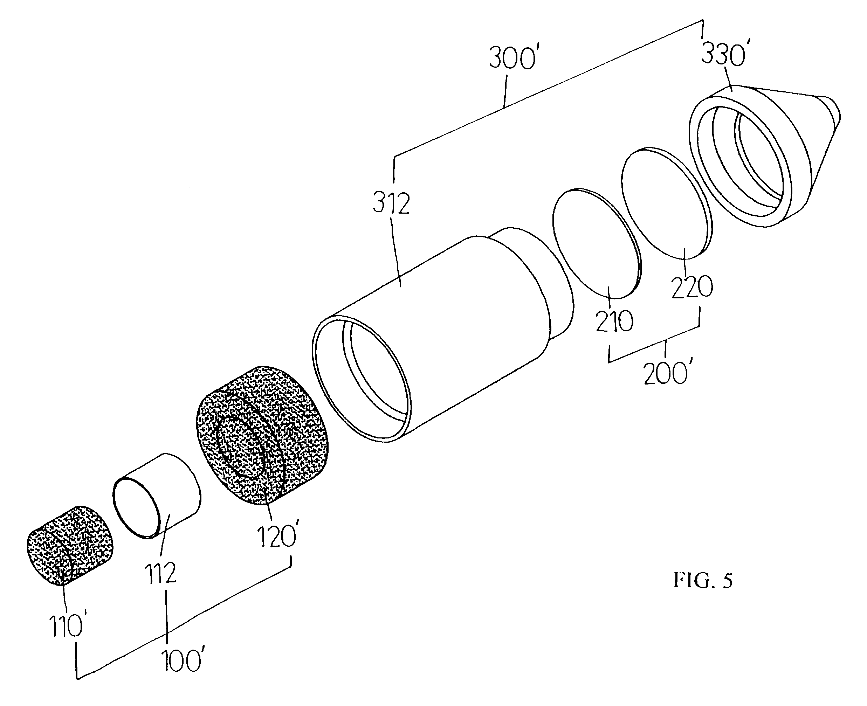

Fig. 5 shows a schematic view of a third preferred embodiment of the present invention.

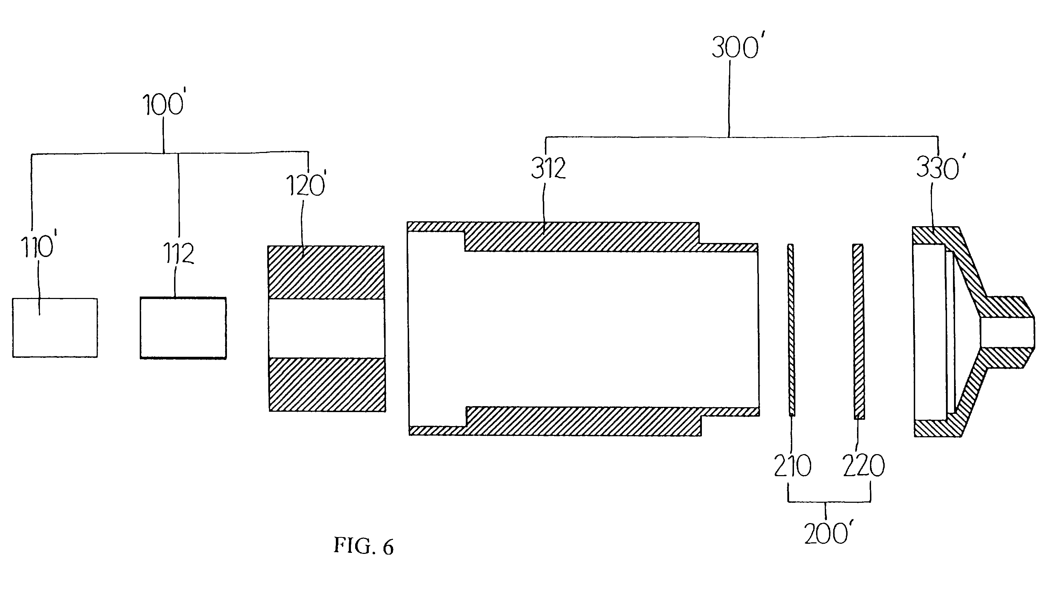

Fig. 6 shows a sectional view of the third preferred embodiment of the present invention.

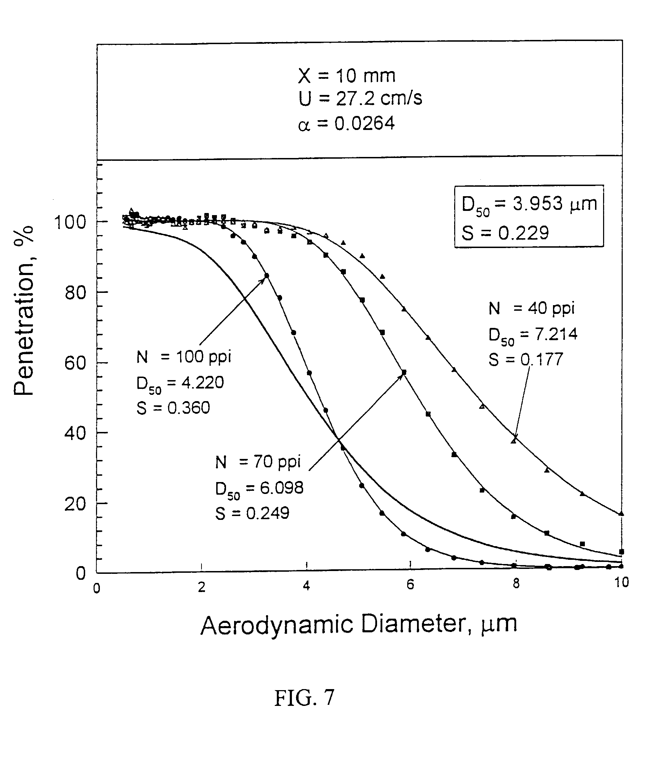

Fig. 7 shows the best-fitting curves of the aerosol penetration rates obtained by the aerosol size-selective sampling device of the prior art, with the solid bold curves representing the internationally-defined respirable curves, and with different symbols representing the penetration rates obtained by the foam bodies having different porosities.

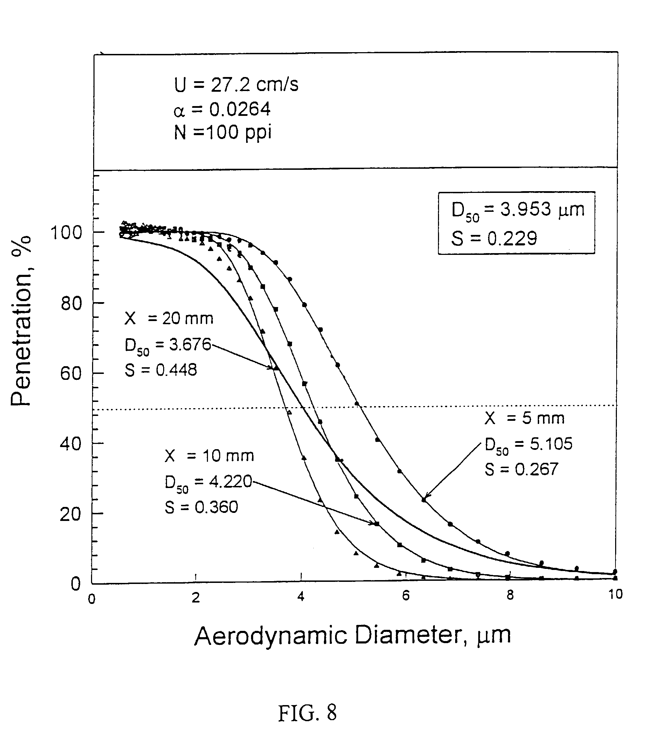

Fig. 8 shows the best-fitting curves of the aerosol penetration rates obtained by the aerosol size-selective sampling device of the prior art, with the solid bold curves representing the internationally-defined respirable curves, and with different symbols representing the penetration rates obtained by the foam bodies different in thickness.

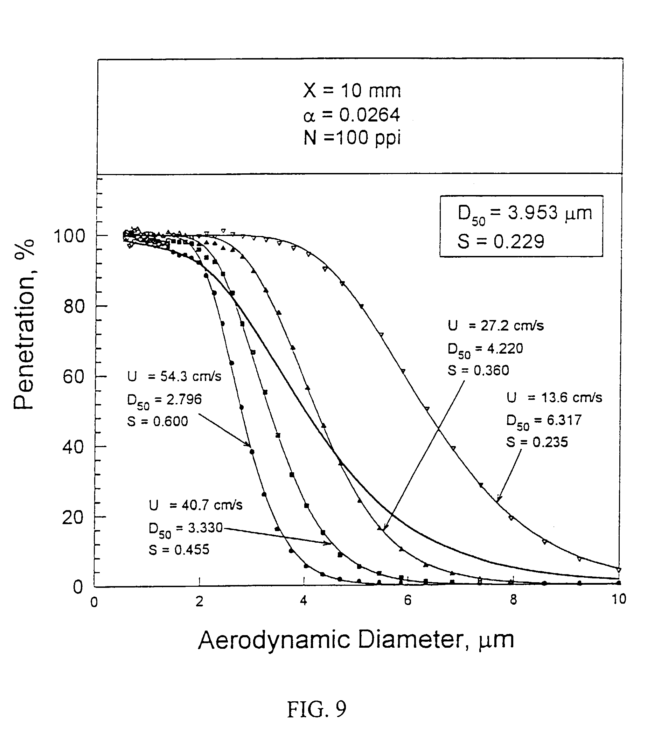

Fig. 9 shows the best-fitting curves of the aerosol penetration rates obtained by the aerosol size-selective sampling device of the prior art, with the solid bold curves representing the internationally-defined respirable curves, and with different symbols representing the penetration rates obtained by the foam bodies having different surface wind velocities.

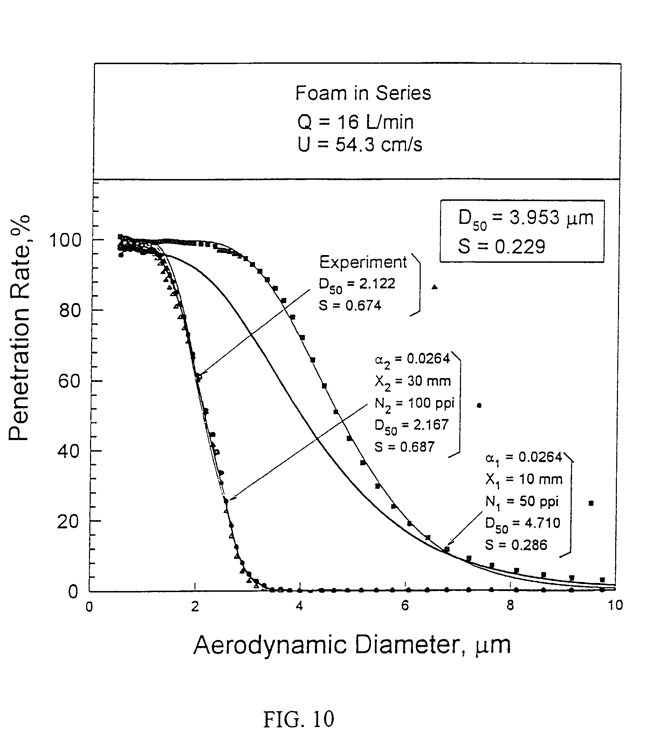

Fig. 10 shows the best-fitting curves of the aerosol penetration rates obtained by the aerosol size-selective sampling device of the prior art, with the solid bold curves representing the internationally-defined respirable curves, and with different symbols representing the penetration rates obtained by the device comprising two foam bodies different in porosity and arranged in a serial fashion, and the devices comprising individual foam body.

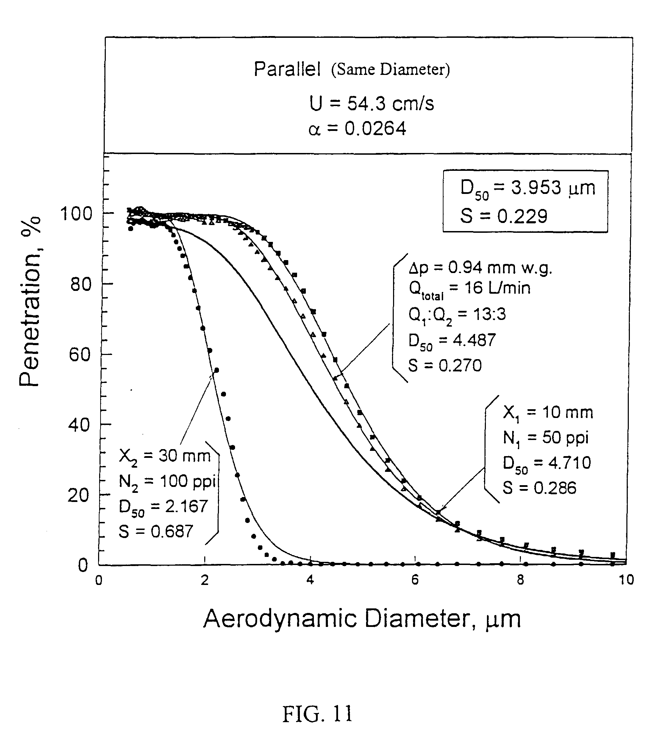

Fig. 11 shows the best-fitting curves of the aerosol penetration rates obtained respectively by the aerosol seize-selective sampling devices of the present invention and the prior art, with the solid bold curves representing the internationally-defined respirable curves, and with different symbols representing the penetration rates obtained by the device comprising two foam bodies different in porosity and arranged in a parallel manner, and the devices comprising individual foam body.

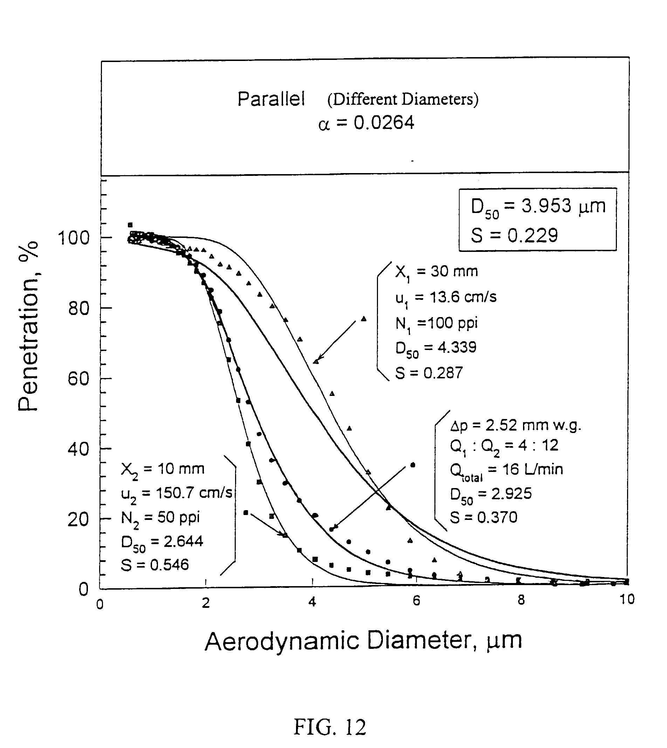

Fig. 12 shows the best-fitting curves of the aerosol penetration rates obtained respectively by the aerosol size-selective sampling devices of the present invention and the prior art, with the solid bold curves representing the internationally-defined respirable curves, and with different symbols representing the penetration rates obtained by the device comprising two foam bodies different in porosity and diameter and arranged in a parallel manner, and the devices comprising individual foam body.

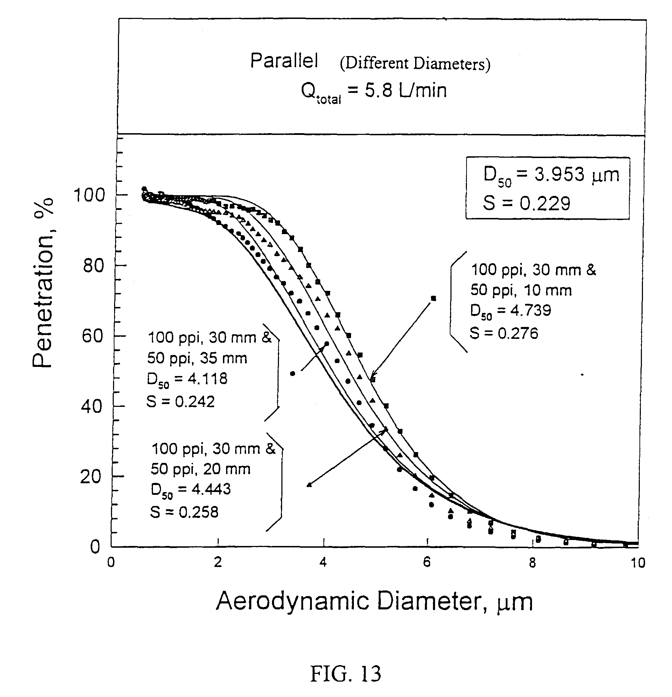

Fig. 13 shows the best-fitting curves of the aerosol penetration rates obtained by the aerosol size-selective sampling device of the present invention, with the solid bold curves representing the internationally-defined respirable curves, and with different symbols representing the penetration rates obtained by the devices comprising the foam bodies different in porosity and diameter, and arranged in a parallel manner.

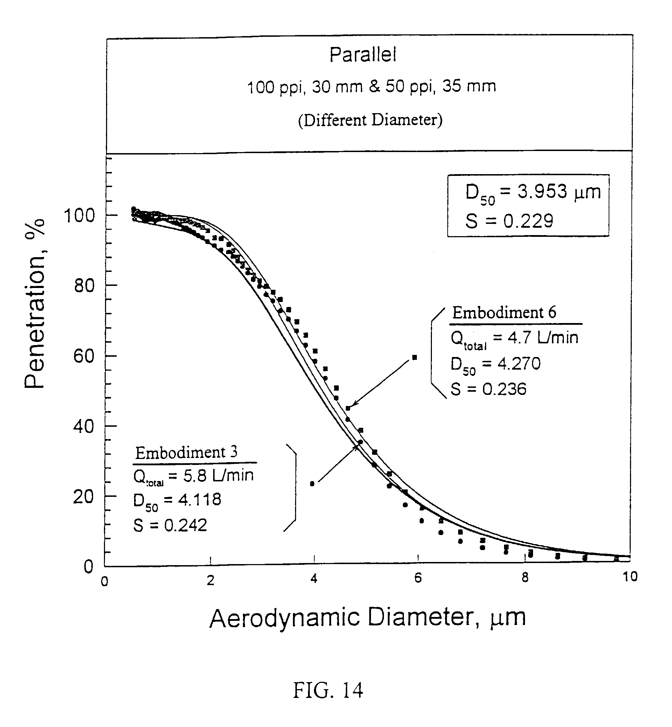

Fig. 14 shows the best-fitting curves of the aerosol penetration rates obtained by the aerosol size-selective sampling device of the present invention, with the solid bold curves representing the internationally-defined respirable curves, and with different symbols representing the penetration rates obtained by the devices comprising the foam bodies different in porosity and arranged in different parallel manners.

### DETAILED DESCRIPTION OF THE INVENTION

For comparison, a prior art aerosol size-selective sampling device is first described. As shown in Fig. 2, an aerosol size-selective sampling device of the prior art comprises a pre-filter 10, a collector 20, and a base housing 30. The air pumping direction is indicated by an arrow. The filter paper is used as the collector 20, whereas a foam body made of polyurethane, polyester or polyether is used as the pre-filter 10.

As shown in Fig. 3, an aerosol size-selective sampling device of the first preferred embodiment of the present invention is composed of a pre-filter 100, a collector 200, and a Y-shaped base housing 300. The pre-filter 100 is made up of a foam body 110 of a low porosity and a foam body 120 of a high porosity. The base housing 300 comprises a first parallel tube 310, a second parallel tube 320, and a single tube 330 connecting the first parallel tube 310 and the second parallel tube 320. The foam bodies 110 and 120 are located respectively in the inlet ends of the first parallel tube 310 and the second parallel tube 320. The collector 200 is located in one end of the single tube 330. The air pumping direction is indicated by an arrow. The collector 200 is in fact the filter paper. The pre-filter 100 is a foam body made of polyurethane (PU), polyester, or polyether. The pre-filter 100 may be also made of a sintered glass or porous ceramic material.

Now referring to Fig. 4, an aerosol size-selective sampling device of the second preferred embodiment of the present invention is similar in construction to that of the first preferred embodiment of the present invention, with the difference being that the first parallel tube 310 and the second parallel tube 320 are different in diameter, and that the foam body 110 and the foam body 120 are different in diameter.

As illustrated in Figs. 5 and 6, an aerosol size-selective sampling device of the third preferred embodiment of the present invention is composed of a pre-filter 100', a collector 200', and a cylindrical base housing 300.

The pre-filter 100' is composed of a cylindrical foam body 110' of a low porosity, a ring-shaped foam body 120' of a high porosity, and a separation tube 112. The cylindrical foam body 110' is first fitted into the separation tube 112 and is then fitted into the center of the ring-shaped foam body 120' such that the cylindrical foam body 110' is concentric with the ring-shaped foam body 120'. The collector 200' is composed of a filter paper 210 which is supported by a backing board 220. The base housing 300' comprises a pre-filter fastening tube 312 and a collector fastening tube 330'. The pre-filter 100' is fastened with the fastening tube 312 such that the pre-filter 100' is located at an air inlet. The pre-filter fastening board 220 and the filter paper 210 are located at the right end of the collector fastening tube 330' before being fitted into the left end of the pre-filter fastening tube 312.

The aerosol size-selective sampling device of the present invention is basically similar in construction to that of the prior art, with the difference being that the pre-filter of the device of the present invention is composed of two or more porous filtration materials arranged in a parallel manner such that the colloidal particles of aerosol are guided in a parallel and diverting manner to deposit in the sampling device.

The porous filtration material used in the device of the present invention is similar in porosity to the device of the prior art. The preferred porosity ranges between 5 and 200 ppi (pore per inch). However, it is suggested that the porosity in the range of 10-100 ppi is most preferred. The parallel filtration materials are preferably different in porosity, with the difference ranging between 2 and 50 times, or more preferably between 5 and 20 times.

The pre-filter of the device of the present invention is preferably comprises two porous filtration materials which are provided with a surface area facing the flow direction of the air. The surface area ratio of the filtration material of a high porosity and the filtration material of a low porosity is preferably in the range of 10:1 to 1:10, and more preferably in the range of 8:1 to 1:5, and still more preferably in the range of 6:1 to 1:2.

The operational conditions of the aerosol size-selective sampling device of the present invention are similar to those of the device of the prior art.

The features of the present invention will be more readily understood upon a thoughtful deliberation of the following detailed description of the embodiments of the present invention in conjunction with the accompanying drawings as well as the comparative study of various relevant examples.

In view of the technical difficulties that are involved in the production and the control of the aerosol having larger particle diameters, the internationally-defined inhalable deposition curves have not been established indisputably and are therefore subject to a great deal of debate. In addition, the current research data on the aerosol having an aerodynamic diameter greater than 100 µm are rather insufficient. Moreover, the sampling devices, such as the thoracic sampling device, are not available. The thoracic sampling device developed by the United States EPA is not widely adopted at best. As a result, the emphasis of the present invention is placed on the respirable aerosol.

In both the comparative example and the embodiments of the present invention, a peristaltic pump and an ultrasonic atomizing nozzle were used to establish the system for producing the respirable aerosols. The peristaltic pump (Model 7550-90) was made by Cole-Parmer Instrument Co., Niles, Illinois, U.S.A., whereas the ultrasonic atomizing nozzle (Model 3050) is a product of Sono-Tek Inc., Ponghkeepsie, N.Y., U.S.A. The liquid was transported by means of two peristaltic pumps, which were controlled by a computer system, thereby enabling the linear change in the flow of the liquid to take place in a predetermined period of time. The flow of the transported liquid ranged between 0.01 and 0.6 ml/min. The two peristaltic pumps had a rotating speed ranging between 1 and 60 RPM. The application of the ultrasonic atomizing nozzle is based on the principle that the electrical energy is converted into the mechanical energy by a piezoelectric transducer, thereby generating the high frequency ultrasonic wave capable of crashing the liquid into the droplets in the nozzle. The particle diameter distribution is dependent on the nozzle frequency, the surface tension of the liquid, and the liquid density, which the nozzle frequency being the most important factor determining the particle diameter of the droplets. According to the frequency set up by the manufacturer, the ultrasonic atomizing nozzle is capable of producing the droplets having a diameter ranging between 30 and 70 µm. A desired aerosol having a desired range of diameters are generated by using the peristaltic pumps in conjunction with the control of the liquid composition.

The particle diameter distribution range of the aerosol must cover the respirable size-selective sampling. It is therefore necessary to produce the aerosol having the count median diameter (CMD) ranging between 1 and 10 µm. DOP (dioctyl phthalate) is used as a material for making the aerosol.

It was necessary to employ a testing chamber in the experiment. The air, which was filtered by a high-efficient filtration material, was injected into the chamber at the rate of 90 L/min. for drying and mixing the aerosol. The space inside the testing chamber was about 0.35*0.35*2.2 m³. Located at the bottom was an exhaust duct for removing the exhaust gas produced in the experiment. The aerosol, which were freshly formed by the peristaltic pumps in the testing chamber, were generally carry electrical charges. As a result, the testing chamber was provided therein with a neutralizer to minimize the impact of the electrical charges of the aerosol on the experiment. The neutralizer was made by Static Control Services, Palm Springs, CA., U.S.A. The neutralizer was capable of ionizing the air by means of high voltage so as to produce the bipolar ions of high concentration for neutralizing the electrical charges of the aerosol. As a result, the Boltzman Equilibrium was attained in a short period of time.

The testing chamber of the experiment was also provided with an aerosol electrometer (Model 3068, TSI Inc., St. Paul, MN., U.S.A.) for making sure that the electrical equilibrium was attained. The aerosol electrometer is composed of a filter paper located in the Faraday's cup, and an electric current meter. The filter paper was capable of collecting the electrical charges of the aerosol along with the aerosol, thereby causing the Faraday's cup to be charged electrically. The current value of the Faraday's cup was measured by the electric current meter, so as to make sure that the electrical charge equilibrium of the system was attained.

The aerosol concentration and the particle diameter were measured by an Aerosizer (Model 8000, Amherst Process Instrument Inc., Hadley, MA., U.S.A.), which was capable of measuring the particle diameter ranging between 0.01 µm and 200 µm. The sampling flow rate was 6 L/min. The application of the Aerosizer is based on the principle that the aerosol are forced through two laser beams via an acceleration flow field, and that the time of flight (TOF) between the two laser beams is measured so as to calculate the particle diameters of the aerosol.

The sampling efficiency, especially the aspiration efficiency, of the aerosol having a particle diameter greater than 1 µm is often affected by such factors as the aerosol particle diameter, the ratio of wind velocity inside and outside the sampling tube, and the sampling angle. In the penetration experiments of the following comparative examples 1-11 and the embodiment 6, the Aerosizer was connected with the Y-shaped tube, which was provided in one branch tube thereof with a sampling device. By switching the opening of the branch tubes, the background aerosol and the aerosol passing through the sampling device could be made to pass through substantially the same sampling route so as to avert the adverse impact on the sampling efficiency. In the embodiments 1-5, the foam body of the sampling device was directly loaded and unloaded to carry out the penetration experiments. By using the Aerosizer, the concentrations of different-diameter particles of the aerosol, which passed through or bypassed the sampling device, were measured. The penetration rates of various aerodynamic diameters were calculated based on the measured values of the concentrations of different-diameter particles.

In the following comparative examples and the embodiments, polyurethane foams having the density of 0.810 and the packing density of 0.0264 were used as the porous filtration materials. On the basis of the examination done with the electron microscope, the porosity was calculated to be in the range of 10-100 pores per inch (ppi). In the meantime, the sampling device was not provided therein with the collector (filter paper) in the penetration experiment

### Comparative Examples 1-3 (changing porosity of the porous filtration material)

By using the conventional aerosol size-selective sampling device as shown in Fig. 2, the penetration experiment on the DOP aerosol was carried out. The DOP aerosol had a weight concentration of 180 mg/m³ and a diameter distribution wherein particles having a particle diameter of 10 µm are the maximum. The porous filtration materials had a diameter of 25 mm and a thickness (X) of 10 mm. The surface flow velocity (U) was 27.2 cm/s. The porosity (N) is shown in the following table. The experimental results are shown in the following table as well as Fig. 7.

| Comparative Examples | Porosity (N), (ppi) | 50% Cut-off Size (D₅₀), µm | Slope, Absolute Value (S) |
|---|---|---|---|
| 1 | 100 | 4.220 | 0.360 |
| 2 | 70 | 6.098 | 0.249 |
| 3 | 40 | 7.214 | 0.177 |

As shown in Fig. 7, there is a great deviation between the aerodynamic diameter-penetration rate best-fitting curves of the comparative examples 1-3 and the internationally-defined respirable aerosol curves which are designated by the solid curves without the indicating symbols. In addition, their cut-off sizes (D₅₀) and absolute values of slope (S) are not in conformity with the standard values of D₅₀=3.953 and S=0.229.

### Comparative Examples 4-6 (changing the thickness of the porous filtraiton material)

The porosity (N) of the porous filtration materials was fixed at 100 ppi, whereas the thickness (X) of the porous filtration materials was changed. The procedure of the Comparative Example 1 was repeated. The experimental results are shown in Fig. 8 as well as the following table.

| Comparative Examples | Thickness (X), (mm) | 50% Cut-off Size (D₅₀), µm | Slope, Absolute Value (S) |
|---|---|---|---|
| 4 | 20 | 3.676 | 0.448 |
| 5 | 10 | 4.220 | 0.360 |
| 6 | 5 | 5.105 | 0.267 |

### Comparative Examples 7-10 (changing surface wind velocity)

The surface wind velocity (U) of the porous filtration materials was changed. The procedure of the Comparative Example 1 was repeated. The experimental results are shown in Fig. 9 and the following table.

| Comparative Examples | Wind Velocity (U), (cm/s) | 50% Cut-off Size (D₅₀), µm | Slope, Absolute Value (S) |
|---|---|---|---|
| 7 | 54.3 | 2.796 | 0.600 |
| 8 | 40.7 | 3.330 | 0.455 |
| 9 | 27.2 | 4.220 | 0.360 |
| 10 | 13.6 | 6.317 | 0.235 |

As shown in Figs. 8 and 9, there is a great deviation between the aerodynamic diameter-penetration best-fitting curves of the comparative examples 4-10 and the internationally-defined respirable aerosol curves which are designated by the solid curves without being indicated by the symbols. In addition, their D₅₀ and S values are not in conformity with the standard values of D₅₀=3.953 and S=0.229.

On the basis of the Comparative Examples 1-10, it can be concluded that the results of the comparative examples deviate greatly from the internationally-defined respirable aerosol sampling curves, and that the changes in the porosity, the thickness and the surface wind velocity of the porous filtration materials have failed to eliminate such deviation.

### Comparative Example 11 (serial size-selective sampling)

The DOP aerosol penetration experiment was conducted by using a sampling device which was composed of two porous filtration materials different in porosity. The two porous filtration materials were arranged in series. The DOP aerosol had a weight concentration of 180 mg/m³ and a diameter distribution wherein particles having a particle diameter of 10 µm are the maximum. The surface flow speed (U) was 54.3 cm/s. Two porous filtration materials had a diameter of 25 mm. The first filtration material had a thickness (X₁) of 10mm and a porosity (N₁) of 50 ppi, whereas the second filtration material had a thickness (X₂) of 30mm, and a porosity (N₂) of 100 ppi. The results are shown in Fig. 10 and the following table. The data of the first filtration material alone and the data of the second filtration material alone are also included.

| Comparative Example | N₁ (ppi) | N₂ (ppi) | X₁ (mm) | X₂ (mm) | D₅₀ (µm) | S |
|---|---|---|---|---|---|---|
| -- | 50 | -- | 10 | -- | 4.710 | 0.286 |
| -- | -- | 100 | -- | 30 | 2.167 | 0.687 |
| 11 | 50 | 100 | 10 | 30 | 2.122 | 0.674 |

As shown in Fig. 10, there is a great deal of deviation between the aerodynamic diameter-penetration best-fitting curves of the comparative example 11 and the internationally-defined respirable aerosol curves which are designated by the solid curves without being identified by the symbols. In addition, their D₅₀ and S values are not in conformity with the standard value of D₅₀=3.953 and the standard value of S=0.229.

### Embodiment 1

The penetration experiment was conducted by using the device composed of the parallel tubes having a diameter (d) of 25mm, as shown in Fig. 3. The DOP aerosol had a weight concentration of 180 mg/m³ and a diameter distribution wherein particles having a particle diameter of 10 µm are the maximum. The surface flow speed (U) of 54.3 cm/s. The porosities and the thickness of the two parallel filtration materials are N₁=50ppi, N₂=100ppi, X₁=10mm, X₂=30mm. The results obtained by using only one filtration material are also shown in Fig. 11 and the following table. In Fig. 11, the sum of flow rate is designated by Q ₜₒₜₐₗ, whereas Q₁ and Q₂ stand respectively for the flow rates of the two parallel tubes. The filtration material, which has greater porosity and thickness, is shown to have a smaller flow.

| Embodiment | N₁ (ppi) | N₂ (ppi) | X₁ (mm) | X₂ (mm) | D₅₀ (µm) | S |
|---|---|---|---|---|---|---|
| -- | 50 | -- | 10 | -- | 4.710 | 0.286 |
| -- | -- | 100 | -- | 30 | 2.167 | 0.687 |
| 1 | 50 | 100 | 10 | 30 | 4.487 | 0.270 |

On the basis of Figs. 10 and 11, it is readily apparent that the result of the parallel filtration materials is more in line with the internationally-defined respirable aerosol sampling curve, and that the result of the serial filtration materials is less in line with the internationally-defined respirable aerosol sampling curve.

### Embodiment 2

The penetration experiment was conducted by using the device composed of the parallel tubes having different diameters (d₁=25mm; d₂=13mm), as shown in Fig. 4. The DOP aerosol had a weight concentration of 180 mg/m³ and a diameter distribution wherein particles having a particle diameter of 10 µm are the maximum. The porosity and the thickness of the two parallel filtration materials are N₁=100ppi, N₂=50ppi, X₁=30mm (d₁=25mm), X₂=10mm (d₂=13mm), whereas the surface wind velocity of the two parallel filtration materials disposed in the parallel tubes are respectively U₁=13.6 cm/s, and U₂=150.7 cm/s. The results obtained by using only one filtration material are also shown in Fig. 12 and the following table. In Fig. 12, the sum of flow rate is designated as Qₜₒₜₐₗ while the flows of the two parallel tubes are designated respectively by Q₁ and Q₂.

| Embodiment | N₁ (ppi) | N₂ (ppi) | X₁ (mm) | X₂ (mm) | D₅₀ (µm) | S |
|---|---|---|---|---|---|---|
| -- | 100 | -- | 30 | -- | 4.339 | 0.287 |
| -- | -- | 50 | -- | 10 | 2.644 | 0.546 |
| 2 | 100 | 50 | 30 | 10 | 4.339 | 0.287 |

By comparing Figs. 11-12, it is readily apparent that an appropriate change in the surface wind velocity of the filtration materials can result in a better conformity of the result with the internationally-defined respirable aerosol sampling curve.

### Embodiments 3-5

The thickness (X₂) of the filtration material having the diameter (d₂=13mm) was charged to 10, 20 and 35mm. The procedure of the Embodiment 2 was repeated. In addition, the sum of flow rate (Qₜₒₜₐₗ) was changed to 5.8 L/min. The experimental results are shown in Fig. 13 and the following table.

| Embodiment | N₁ (ppi) | X₁ (mm) | N₂ (ppi) | X₂ (mm) | D₅₀ (µm) | S |
|---|---|---|---|---|---|---|
| 3 | 100 | 30 | 50 | 35 | 4.118 | 0.242 |
| 4 | 100 | 30 | 50 | 20 | 4.443 | 0.258 |
| 5 | 100 | 30 | 50 | 10 | 4.739 | 0.276 |

### Embodiment 6

The penetration experiment was conducted by using the device shown in Figs. 5 and 6. The DOP aerosol had a weight concentration of 180 mg/m³ and a diameter distribution wherein particles having a particle diameter of 10 µm are the maximum. The sum of flow rate (Qₜₒₜₐₗ) is 4.7 L/min. The cylindrical foam body 110' has a length of 35 mm, an outer diameter of 11.7 mm and a porosity of 50 ppi; and the ring-shaped foam body 120' has a length of 30 mm, an inner diameter of 11.6 mm, an outer diameter of 25.0 mm, and a porosity of 100 ppi. The results of this embodiment and the Embodiment 3 are shown together in Fig. 14 and the following table.

| Embodiment | D₅₀ | S |
|---|---|---|
| 3 | 4.118 | 0.242 |
| 6 | 4.270 | 0.236 |

It is therefore readily apparent that the aerodynamic diameter-penetration rate best-fitting curves of the Embodiments 3 and 6 of the present invention are rather in line with the internationally-defined respirable aerosol sampling curves, which are indicated by the solid curves in Fig. 14.

## Claims

1. An aerosol size-selective sampling method comprising taking an aerosol sample from a given atmospheric air by using an aerosol size-selective sampling device comprising a pre-filter (100), a base housing (300) and a collector (200), said collector (200) being disposed in an air outlet end of said base housing (300),
**characterised in that**
said pre-filter (100) comprises two or more porous filtration materials (110, 120) disposed in an air inlet end of said base housing (300) in a parallel manner, said two or more porous filtration materials being different from each other in porosity and/or thickness, and said atmospheric air is passed through said two or more porous filtration materials of said pre-filter (100) in a parallel and diverging pattern before it is allowed to pass in a converging manner through said collector (200), said pre-filter (100) being able to attain a desired penetration rate profile as a function of aerodynamic diameter of aerosol contained in the atmospheric air within a pre-determined range of said aerodynamic diameter.

2. The method as defined in claim 1, wherein said air inlet end of said base housing (300) comprises two or more branched tubes (310,320) for disposing said two or more porous filtration materials (110,120), and said air outlet end of said base housing is a monotube for disposing said collector (200) therein.

3. The method as defined in claim 1, wherein said pre-filter (100') is made up of a plurality of concentric rings (100',120') surrounding a center disk, said air inlet end of said base housing (300') is a monotube (312) for disposing said pre-filter therein, and said air outlet end of said base housing is a monotube (330') for disposing said collector therein.

4. The method as defined in claim 2, wherein said pre-filter (100) is composed of two porous filtration materials (110,120).

5. The method as defined in claim 3, wherein said pre-filter (100') is composed of two porous filtration materials (110',120').

6. The method as defined in one of the claims 1 to 5, wherein said porous filtration materials are made of a foam material, a sintered glass material, or a porous ceramic material.

7. The method as defined in claim 6, wherein said porous filtration materials are made of a foam material.

8. An aerosol size-selective sampling device comprising:
a base housing (300) provided at one end thereof with an air inlet end and at another end thereof with an air outlet end, said air outlet end being adapted to accommodate a collector (200) therein; and
a pre-filter (100) located in said air inlet end of said base housing (300),
**characterised in that**
said pre-filter (100) comprises two or more porous filtration materials (110, 120) being different from each other in porosity and/or thickness and arranged in a parallel manner, such that air flowing between the inlet end and the outlet end may flow in parallel through all of the filtration materials.

9. The device as defined in claim 8, wherein said air inlet end of said base housing (300) comprises two or more branched tubes (310,320) for disposing said two or more porous filtration materials, and said air outlet end of said base housing is a monotube (330) for disposing said collector (200) therein.

10. The device as defined in claim 8, wherein said pre-filter (100') is made up of a plurality of concentric rings (110',120') surrounding a center disk, said air inlet end of said base housing (300) is a monotube (312) for disposing said pre-filter (100') therein, and said air outlet end of said base housing is a monotube (330) for disposing said collector (200) therein.

11. The device as defined in claim 9, wherein said pre-filter (100) is composed of two porous filtration materials (110,120).

12. The device as defined in claim 10, wherein said pre-filter (100') is composed of two porous filtration materials (110',120').

13. The device as defined in one of the claims 8 to 12, wherein said porous filtration materials are made of a foam material, a sintered glass material, or a porous ceramic material.

14. The device as defined in claim 13, wherein said porous filtration materials are made of a foam material.

## Patentansprüche

1. Größenselektives Probennahmeverfahren für Aerosole, das umfaßt, eine Aerosolprobe aus einer gegebenen Atmosphärenluft zu nehmen, wobei eine größenselektive Probennahmenvorrichtung für Aerosole verwendet wird, die ein Vorfilter (100), ein Grundgehäuse (300) und eine Sammeleinrichtung (200) umfaßt, wobei die genannte Sammeleinrichtung (220) in einem Luftauslaßende des genannten Grundgehäuses (300) angeordnet ist, **dadurch gekennzeichnet**, daß das genannte Vorfilter (100) zwei oder mehrere poröse Filtermaterialien (110, 120) umfaßt, die in einem Lufteinlaßende des genannten Grundgehäuses (300) in paralleler Weise angeordnet sind, die genannten zwei oder mehreren porösen Filtermaterialien voneinander in bezug auf die Porosität und/oder Dicke unterschiedlich sind, und die genannte Atmosphärenluft durch die genannten zwei oder mehreren porösen Filtermaterialien des genannten Vorfilters (100) in einem parallelen und divergierenden Muster geleitet werden, bevor sie in einer konvergierenden Weise durch die genannte Sammeleinrichtung (200) hindurchgehen kann, wobei das genannte Vorfilter (100) ein erwünschtes Eindringungsratenprofil als Funktion des aerodynamischen Durchmessers des Aerosols, das in der Atmosphärenluft enthalten ist, innerhalb eines vorbestimmten Bereiches des genannten aerodynamischen Durchmessers erreichen kann.

2. Das Verfahren, wie in Anspruch 1 definiert, wobei das genannte Lufteinlaßende des genannten Grundgehäuses (300) zwei oder mehrere verzweigte Rohre (310, 320) zur Anordnung der genannten zwei oder mehreren porösen Filtermaterialien (110, 120) umfaßt, und daß das genannte Luftauslaßende des genannten Grundgehäuses ein Einzelrohr zur Anordnung der genannten Sammeleinrichtung (200) darin ist.

3. Das Verfahren, wie in Anspruch 1 definiert, wobei das genannte Vorfilter (100') aus einer Mehrzahl konzentrischer Ringe (110', 120') hergestellt ist, die eine mittige Scheibe umgeben, das genannte Lufteinlaßende des genannten Grundgehäuses (300') ein Einzelrohr (312) zur Anordnung des genannten Vorfilters darin ist, und das genannte Luftauslaßende des genannten Grundgehäuses ein Einzelrohr (330') zur Anordnung der genannten Sammeleinrichtung darin ist.

4. Das Verfahren, wie in Anspruch 2 definiert, wobei das genannte Vorfilter (100) aus zwei porösen Filtermaterialien (110, 120) gebildet ist.

5. Das Verfahren, wie in Anspruch 3 definiert, wobei das genannte Vorfilter (100') aus zwei porösen Filtermaterialien (110', 120') gebildet ist.

6. Das Verfahren, wie in einem der Ansprüche 1 bis 5 definiert, wobei die genannten porösen Filtermaterialien aus einem Schaummaterial, einem gesinterten Glasmaterial oder einem porösen Keramikmaterial hergestellt sind.

7. Das Verfahren, wie in Anspruch 6 definiert, wobei die genannten porösen Filtermaterialien aus einem Schaummaterial hergestellt sind.

8. Eine größenselektive Probennahmevorrichtung für Aerosole, die umfaßt:
ein Grundgehäuse (300), das an seinem einen Ende mit einem Lufteinlaßende und an seinem anderen Ende mit einem Luftauslaßende versehen ist, wobei das genannte Luftauslaßende eine Sammeleinrichtung (200) darin aufnehmen kann; und
ein Vorfilter (100), das in dem genannten Lufteinlaßende des genannten Grundgehäuses (300) angeordnet ist,
**dadurch gekennzeichnet,** daß
das genannte Vorfilter (100) zwei oder mehrere poröse Filtermaterialien (110, 120) umfaßt, die in bezug auf die Porosität und/oder die Dicke voneinander verschieden und in paralleler Weise angeordnet sind, so daß Luft, die zwischen dem Einlaßende und dem Auslaßende fließt, parallel durch alle Filtermaterialien hindurchfließen kann.

9. Das Vorrichtung, wie in Anspruch 8 definiert, wobei das genannte Lufteinlaßende des genannten Grundgehäuses (300) zwei oder mehrere verzweigte Rohre (310, 320) zur Anordnung der genannten zwei oder mehreren porösen Filtermaterialien (110, 120) umfaßt, und daß das genannte Luftauslaßende des genannten Grundgehäuses ein Einzelrohr zur Anordnung der genannten Sammeleinrichtung (200) darin ist.

10. Das Vorrichtung, wie in Anspruch 8 definiert, wobei das genannte Vorfilter (100') aus einer Mehrzahl konzentrischer Ringe (110', 120') hergestellt ist, die eine mittige Scheibe umgeben, das genannte Lufteinlaßende des genannten Grundgehäuses (300') ein Einzelrohr (312) zur Anordnung des genannten Vorfilters darin ist, und das genannte Luftauslaßende des genannten Grundgehäuses ein Einzelrohr (330') zur Anordnung der genannten Sammeleinrichtung darin ist.

11. Das Vorrichtung, wie in Anspruch 9 definiert, wobei das genannte Vorfilter (100) aus zwei porösen Filtermaterialien (110, 120) gebildet ist.

12. Das Vorrichtung, wie in Anspruch 10 definiert, wobei das genannte Vorfilter (100') aus zwei porösen Filtermaterialien (110', 120') gebildet ist.

13. Das Vorrichtung, wie in einem der Ansprüche 8 bis 12 definiert, wobei die genannten porösen Filtermaterialien aus einem Schaummaterial, einem gesinterten Glasmaterial oder einem porösen Keramikmaterial hergestellt sind.

14. Das Vorrichtung, wie in Anspruch 13 definiert, wobei die genannten porösen Filtermaterialien aus einem Schaummaterial hergestellt sind.

## Revendications

1. Procédé d'échantillonnage granulométriquement sélectif d'aérosol, comprenant le prélèvement d'un échantillon d'aérosol à partir d'un air atmosphérique donné à l'aide d'un dispositif d'échantillonnage granulométriquement sélectif d'aérosol, comprenant une pré-filtre (100), un logement de base (300) et un collecteur (200), ledit collecteur (200) étant disposé dans une extrémité de sortie d'air dudit logement de base (300), caractérisé en ce que ledit pré-filtre (100) comprend au moins deux matériaux de filtration poreux (110, 120) disposés de manière parallèle dans une extrémité d'entrée d'air dudit logement de base (300), lesdits matériaux de filtration poreux étant différents l'un de l'autre en termes de porosité et/ou d'épaisseur, et en ce que ledit air atmosphérique traverse lesdits matériaux de filtration poreux dudit pré-filtre (100) suivant un schéma parallèle et divergent avant d'être autorisé à passer de manière convergente à travers ledit collecteur (200), ledit pré-filtre (100) pouvant atteindre un profil de taux de pénétration voulu en fonction du diamètre aérodynamique de l'aérosol contenu dans l'air atmosphérique à l'intérieur d'une plage prédéterminée dudit diamètre aérodynamique.

2. Procédé selon la revendication 1, dans lequel ladite extrémité d'entrée d'air dudit logement de base (300) comprend au moins deux tubes ramifiés (310, 320) dans lesquels lesdits matériaux de filtration poreux (110, 120) sont destinés à être disposés, tandis que ladite extrémité de sortie d'air dudit logement de base est un tube unique dans lequel ledit collecteur (200) est destiné à être disposé.

3. Procédé selon la revendication 1, dans lequel ledit pré-filtre (100') est constitué de plusieurs bagues concentriques (110', 120') entourant un disque central, ladite extrémité d'entrée d'air dudit logement de base (300') est un tube unique (312) dans lequel ledit pré-filtre est destiné à être disposé, tandis que ladite extrémité de sortie d'air dudit logement de base est un tube unique (330') dans lequel ledit colleçteur est destiné à être disposé.

4. Procédé selon la revendication 2, dans lequel ledit pré-filtre (100) se compose de deux matériaux de filtration poreux (110, 120).

5. Procédé selon la revendication 3, dans lequel ledit pré-filtre (100') se compose de deux matériaux de filtration poreux (110', 120').

6. Procédé selon l'une quelconque des revendications 1 à 5, dans lequel lesdits matériaux de filtration poreux sont faits d'un matériau en mousse, d'un matériau en verre fritté ou d'un matériau céramique poreux.

7. Procédé selon la revendication 6, dans lequel lesdits matériaux de filtration poreux sont faits d'un matériau en mousse.

8. Dispositif d'échantillonnage granulométriquement sélectif d'aérosol, comprenant :
un logement de base (300) pourvu au niveau de l'une de ses extrémités d'une extrémité d'entrée d'air et de son autre extrémité d'une extrémité de sortie d'air, ladite extrémité de sortie d'air étant adaptée pour recevoir un collecteur (200) en elle ; et un pré-filtre (100) situé dans ladite extrémité d'entrée d'air dudit logement de base (300), caractérisé en ce que ledit pré-filtre (100) comprend au moins deux matériaux de filtration poreux (110, 120) différents l'un de l'autre en termes de porosité et/ou d'épaisseur et disposés de manière parallèle, de sorte que l'air s'écoulant entre l'extrémité d'entrée et l'extrémité de sortie peut circuler en parallèle à travers tous les matériaux de filtration.

9. Dispositif selon la revendication 8, dans lequel ladite extrémité d'entrée d'air dudit logement de base (300) comprend au moins deux tubes ramifiés (310, 320) dans lesquels lesdits matériaux de filtration poreux sont destinés à être disposés, tandis que ladite extrémité de sortie d'air dudit logement de base est un tube unique (330) dans lequel ledit collecteur (220) est destiné à être disposé.

10. Dispositif selon la revendication 8, dans lequel ledit pré-filtre (100') se compose de plusieurs bagues concentriques (110', 120') entourant un disque central, ladite extrémité d'entrée d'air dudit logement de base (300) est un tube unique (312) dans lequel ledit pré-filtre (100') est destiné à être disposé, tandis que ladite extrémité de sortie d'air dudit logement de base est un tube unique (330') dans lequel ledit collecteur (200) est destiné à être disposé.

11. Dispositif selon la revendication 9, dans lequel ledit pré-filtre (100) se compose de deux matériaux de filtration poreux (110, 120).

12. Dispositif selon la revendication 10, dans lequel ledit pré-filtre (100') se compose de deux matériaux de filtration poreux (110', 120').

13. Dispositif selon l'une quelconque des revendications 8 à 12, dans lequel lesdits matériaux de filtration poreux sont faits d'un matériau en mousse, d'un matériau en verre fritté ou d'un matériau céramique poreux.

14. Dispositif selon la revendication 13, dans lequel lesdits matériaux de filtration poreux sont faits d'un matériau en mousse.
